# EUROPÄISCHE PATENTSCHRIFT

(11) **EP 3 796 474 B1**
(45) Veröffentlichungstag und Bekanntmachung des Hinweises auf die Patenterteilung: **15.01.2025**
(21) Anmeldenummer: 20207771.5
(22) Anmeldetag: 16.11.2020
(51) Int. Cl.: H01R 4/18, H01R 4/48, H01R 4/64, H01R 31/06, H02G 3/06, H02G 15/076, H01R 13/74

(54) **ANSCHLUSSVORRICHTUNG ZUM ELEKTRISCHEN KONTAKTIEREN EINES ELEKTROGERÄTS**
CONNECTION DEVICE FOR ELECTRICALLY CONTACTING AN ELECTRICAL DEVICE
DISPOSITIF DE RACCORDEMENT PERMETTANT DE CONTACTER ÉLECTRIQUEMENT UN APPAREIL ÉLECTRIQUE

(30) Priorität: 10.12.2019 DE 202019106867 U
(43) Veröffentlichungstag der Anmeldung: 24.03.2021
(73) Patentinhaber: UNGER Kabel-Konfektionstechnik GmbH, 09465 Sehmatal - Sehma (DE)
(72) Erfinder: Schubert, Mike, 09465 Sehmatal-Sehma (DE)
(74) Vertreter: Weidner Stern Jeschke

(56) Entgegenhaltungen:
- EP-A2- 2 978 075
- DE-U1- 202013 101 698
- DE-U1- 29 907 005
- JP-A- 2011 159 505

## Beschreibung

Die Erfindung betrifft eine Anschlussvorrichtung zum elektrischen Kontaktieren eines Elektrogeräts mit einem Netzstecker, einem Netzkabel, wobei das Netzkabel einen Nullleiter und einen Phasenleiter aufweist, und einer Geräteanschlusseinrichtung, wobei der Netzstecker an einem Ende des Netzkabels und die Geräteanschlusseinrichtung an einem anderen Ende des Netzkabels oder mittig angeordnet sind und die Geräteanschlusseinrichtung eine Klemmfeder aufweist und an ein Gehäuse des Elektrogerätes montierbar ist. Weiterhin betrifft die Erfindung ein Elektrogerät mit einer Anschlussvorrichtung.

Das Kontaktieren eines Elektrogerätes mit einem entsprechenden Netzstecker ist für Elektrogerätehersteller mit hohen Aufwänden behaftet, da die Netzstecker auf die jeweiligen Elektroanschlüsse der Länder angepasst sein müssen. Zudem muss ein Erdungskontakt ebenfalls etabliert werden. Derartige Erdungskontakte eines Gehäuses eines Elektrogerätes werden insbesondere durch Schrauben oder Aufstecken realisiert.

Das Schrauben verursacht einen hohen Arbeitsaufwand und beim Aufstecken kann es passieren, dass sich die Verbindung löst. Weiterhin ist nachteilig, dass ein Kontaktieren durch Schrauben dadurch an Klemmkraft verliert, dass der Druck der Schraube auf das Kabel den Werkstoff des Kabels über längere Einwirkzeit zum Fließen bringt. Damit kann eine Unterbrechung der Erdung des entsprechenden Elektrogerätes während der Nutzungsdauer erfolgen, was deutliche Gefahren hervorruft.

Eine Montage eines Erdungsleiter durch Aufstecken eines Steckers erfordert zusätzliche Bauteile innerhalb des Elektrogerätes, nämlich eine Steckfahne oder ein ähnlich ausgeführtes Aufnahmemittel für einen Stecker. Soll beispielsweise das Gehäuse des Elektrogerätes geerdet sein, so muss an diesem Gehäuse auch eine Steckfahne, beispielsweise durch Aufschweißen oder Anschrauben, vorgesehen sein.

Weiterhin ist die Ausführung derartiger Kontaktiersysteme elektrischer Geräte insbesondere bei deren Netzanschluss aus Sicht der elektromagnetischen Verträglichkeit unvorteilhaft gelöst, da der Netzschutzleiter durch die Gehäusewand in das Gerät geführt wird, ohne bereits an der Durchdringungsstelle des Gehäuses wirksam kontaktiert zu sein. Damit wird die Wirkung eines Gehäuses eines solchen Gerätes als Faraday'scher Käfig nicht genutzt.

Die DE 2020 13101698 U1 offenbart eine Anschlussvorrichtung zum elektrischen Kontaktieren eines Elektrogerätes mit einem Netzstecker, wobei ein Erdungsleiter und/oder eine Erdungsverbindung elektrisch kontaktierend mittels eines Steckers an einer Steckfahne eines Gehäusebleches herstellbar ist. EP2978075A2 offenbart eine Anschlussvorrichtung gemäß dem Oberbegriff des Anspruchs

Aufgabe der Erfindung ist es, den Stand der Technik zu verbessern.

Gelöst wird die Aufgabe durch eine Anschlussvorrichtung zum elektrischen Kontaktieren eines Elektrogeräts mit einem Netzstecker, einem Netzkabel, wobei das Netzkabel einen Nullleiter und einen Phasenleiter aufweist, und einer Geräteanschlusseinrichtung, wobei der Netzstecker an einem Ende des Netzkabels und die Geräteanschlusseinrichtung an einem anderen Ende des Netzkabels oder mittig angeordnet sind und die Geräteanschlusseinrichtung eine Klemmfeder aufweist und an ein Gehäuse des Elektrogerätes montierbar ist, wobei der Erdungsleiter mittels der als mittels elastischer Verformung belastete Zunge ausgebildeten Klemmfeder elektrisch kontaktierend mit dem Gehäuse verbunden ist, sodass bei einer Montage der Geräteanschlusseinrichtung am Gehäuse des Elektrogerätes mittels der Klemmfeder eine Kraft auf das Gehäuse ausgeübt wird und eine Erdung der Gehäuseblechaufnahme mittels der Gehäuseblechaufnahme ermöglicht ist.

Die erfindungsgemäße Anschlussvorrichtung ermöglicht es dem Anwender mit einem Handgriff die Hauptschutzleiterverbindung des Netzschutzleiters auf das Gerätegehäuse herzustellen. Hierzu wird vorab bereits die Anschlussvorrichtung derart aufbereitet, dass lediglich eine Klemmfeder die Kontaktierung des Schutzleiters ermöglicht.

Erfindungsgemäß ist der Erdungsleiter nur mit der Klemmfeder am Gehäuse des Elektrogehäuses geklemmt, sodass kein zusätzliches Blech oder keine zusätzliche Blende erforderlich ist. Dabei kann die Klemmfeder die abisolierten Litzen des Netzschutzleiters ohne zusätzliche Blende mit dem Metallgehäuse des elektrischen Gerätes verbinden.

Somit können die Arbeitsschritte beim Hersteller von Elektrogeräten deutlich verringert werden. Weiterhin vorteilhaft ist, dass das Einstecken beispielsweise nur in einer einzigen Bewegungsrichtung erfolgt. Ein etwaiges zusätzliches Verrasten durch eine gesonderte Bewegung in eine andere Richtung, beispielsweise eine Rotation, ist vorliegend somit nicht immer notwendig.

In einer Alternativen kann jedoch auch eine Verrastung durch eine gesonderte Bewegung, beispielsweise eine Rotation oder winkelförmige Bewegung, erfolgen.

Folgende Begriffe seien an dieser Stelle erläutert:

Ein "elektrisches Kontaktieren" eines Elektrogerätes bezeichnet den Anschluss des Elektrogerätes an ein elektrisches Versorgungsnetz, beispielsweise an eine Wechselspannungsversorgung. Das elektrische Kontaktieren umfasst dabei insbesondere auch den Anschluss eines Phasenleiters sowie eines Nullleiters, kann jedoch auch den Anschluss an eine dreiphasige Wechselspannungsversorgung bedeuten. Dabei sind dann beispielsweise drei Phasenleiter sowie ein gemeinsamer Nullleiter vorhanden. Weiterhin umfasst das elektrische Kontaktieren den Anschluss eines Erdungsleiters, welcher auch Schutzleiter genannt wird und als Schutzleiter für die elektrische Versorgung des Elektrogerätes dient und metallische Bestandteile des Elektrogerätes, wie beispielsweise auch das Gehäuse, kontaktieren muss, um eine Gefährdung von Personen bei einer Fehlfunktion des Elektrogerätes zu vermeiden. Der Erdungs- oder Schutzleiter leitet in einem solchen Fall Fehlerspannung ab, so dass ein elektrischer Schlag für eine Person bestmöglich abgeschwächt oder vermieden wird.

Ein "Gehäuse" ist ein das Elektrogerät umfassender Hohlkörper, welcher insbesondere ein mechanisches und elektrisches Zugreifen auf innere Bestandteile des Elektrogerätes verhindert oder erschwert. Insbesondere ist ein solches Gehäuse im Sinne der vorliegenden Erfindung ein Blechgehäuse, ein Metallgehäuse oder ein auf andere Weise elektrisch leitendes Gehäuse. Ein solches Gehäuse unterliegt dann nämlich der Pflicht zur Kontaktierung mit einer Erdung oder einem Schutzleiter des Elektrogerätes.

Ein "Netzstecker" kann jede genormte oder nicht genormte Anschlussmöglichkeit mit darin inbegriffener elektrischer Kontaktierungsmöglichkeit für ein solches Elektrogerät an ein länderspezifisches Stromversorgungsnetz sein. Beispielsweise ist ein solcher Netzstecker ein sogenannter Schuko-Stecker, ein CE-Stecker oder ein Drehstromstecker für eine Anschlussleistung von 16 Ampère oder 32 Ampère.

Ein "Netzkabel" ist beispielsweise das Anschlusskabel eines Elektrogerätes, in welchem mehrere Litzen oder Kabel zur Verbindung des Netzsteckers mit dem Elektrogerät angeordnet sind. Beispielsweise umfasst dieses Netzkabel einen oder mehrere Phasenleiter, einen Nullleiter sowie einen Erdungs- oder Schutzleiter.

Eine "Geräteanschlusseinrichtung" ist beispielsweise ein Terminal, eine Kabeldurchführung oder eine Kabeltülle mit einer Möglichkeit, an ein Gerätegehäuse angeschlossen zu werden, sowie gleichwirkende Einrichtungen. Beispielsweise ist eine Geräteanschlusseinrichtung eine kombinierte Durchführung für ein Kabel, mit welcher das Kabel auch an einem Gerätegehäuse zugentlastet montierbar ist.

Eine "Klemmfeder" kann beispielsweise ein gebogener Blechstreifen, eine mit einer Feder belastete Zunge, oder eine andere Einrichtung sein, mittels welcher mittels elastischer Verformung eine Kraft oder ein Druck ausgeübt werden kann. Insbesondere kann diese Klemmfeder aus einem Metall hergestellt sein, sodass eine elektrische Kontaktierung ermöglicht ist. Eine solche Klemmfeder kann als Kontaktierungselement an das Gehäuse eines Elektrogerätes dienen oder auch einen Erdungs- oder Schutzleiter direkt an ein solches Gehäuse pressen, um einen elektrischen Kontakt herzustellen.

Ein "Gehäuseblech" ist beispielsweise ein Stahlblech, ein Aluminiumblech oder ein Blech aus einem anderen, leitenden Material. Das Gehäuseblech dient insbesondere dazu, in einem Gehäuse eines Elektrogerätes als Bestandteil der Anschlussvorrichtung eine Öffnung in diesem Gehäuse zu verschließen, insbesondere nach Montage der Anschlussvorrichtung. Ein solches Gehäuseblech kann daher auch aus einem identischen oder ähnlichen Material und beispielsweise mit identischer oder ähnlicher Blechstärke wie das Gehäuse eines Elektrogerätes ausgeführt sein. Ein solches "Gehäuseblech kann auch als "Einschubblech" oder "Blende" bezeichnet sein.

Eine "Gehäuseblechaufnahme" ist beispielsweise eine Ausnehmung, ein Durchbruch oder ein Schlitz innerhalb eines Gehäuses eines Elektrogerätes. Die Gehäuseblechaufnahme ist dabei beispielsweise so gestaltet, dass ein Gehäuseblech in dieser Gehäuseblechaufnahme aufgenommen werden kann. Insbesondere ist die Gehäuseblechaufnahme korrespondierend zum Gehäuseblech und/oder korrespondierend zur Geräteanschlusseinrichtung ausgestaltet, sodass auch eine elektrische Kontaktierung, beispielsweise mit dem Gehäuseblech oder dem Schutzleiter erfolgt.

Ein "Crimpkontakt" kann jede Einrichtung sein, welche dazu geeignet ist, ein Kabel, einen Leiter, eine Litze oder einen anderen Endbereich eines elektrisch leitenden Systems aufzunehmen und durch dauerhafte plastische Verformung einzelner Bauteile elektrisch kontaktierend aufzunehmen. Insbesondere werden solche Crimpkontakte mittels eines Spezialwerkzeugs, nämlich einer Crimp-Zange oder dem Werkzeug einer Crimppresse, kontaktiert.

Die "Erdung" ist eine Gesamtheit aller Mittel und Maßnahmen zum Erden, also zum Ableiten von Fehlerspannungen- oder - strömen elektrischer Geräte über die Netzschutzleiter und/oder den Erdungspotentialausgleich, beispielsweise auf den Sternpunkt des Stromversorgungstransformators. Eine solche Erdung dient dem Potenzialausgleich und auch dem fließen eines Abschalt- oder Fehlerstromes zum Abschalten von fehlerhaften Geräten und Netzen, und damit dem Schutz von Lebewesen und Geräten.

Mittels der Erdung wird elektrische Spannung oder elektrisches Potenzial so abgeleitet, dass diese bestenfalls nicht oder zumindest stark reduziert auf eine Person wirksam sein kann. Die Erdung erfolgt in der Regel mittels eines Erdungs- oder Schutzleiters, welcher weiterführend, beispielsweise über einen Netzstecker mit Erdungs- oder Schutzkontakten, geerdet wird.

Um eine besonders sichere und einfache Kontaktierung des Erdungsleiters, also eine besonders einfache und sichere Durchführung der Erdung zu gewährleisten, ist der Erdungsleiter mittig oder in einem dem anderen Ende zugeordneten Bereich abisoliert. Damit liegt eine Kontaktierungsstelle vor und diese Kontaktierungsstelle ist mit dem Gehäuseblech oder einem Bestandteil des Gehäuses eines Elektrogerätes elektrisch kontaktierend verbunden. Alternativ kann auch die abisolierte Stelle direkt, beispielsweise mit der Klemmfeder, an einen elektrisch leitenden Teil eines Gehäuses eines Elektrogerätes kontaktiert sein.

Zudem kann damit die Erdung schon vor der Montage der Anschlussvorrichtung an das Gehäuseblech erfolgen. Ein separates Kontaktieren einer weiteren Litze kann so unterbleiben. Das Kontaktieren kann durch eine am Gehäuseblech oder auch an einer Blende angebrachte Crimpverbindung oder direkt mittels einer Kontaktfeder erfolgen.

Eine "Kontaktierungsstelle" ist dabei beispielsweise ein abisolierter Bereich des Erdungsleiters, ein Bereich in dem die Isolierung des Erdungsleiters durchtrennt oder durchstochen ist oder jede andere Möglichkeit, einen im Erdungsleiter liegenden Bereich, nämlich eine Litze oder einen Draht, elektrisch zu kontaktieren. Insbesondere kann dies auch ein mit einem Schnellverbinder teilweise durchtrennter Bereich einer Isolierung zur Kontaktierung des Leiters mit dem Schnellverbinder sein.

In einer Ausführungsform sind das Netzkabel und das Gehäuseblech mittels eines Befestigungselements, insbesondere mittels eines Spritzgusselements, miteinander verbunden, so dass die Geräteanschlusseinrichtung dadurch gebildet ist.

Ein solches Spritzgusselement kann dabei beispielsweise auch gleichzeitig als Durchführung für ein Netzkabel dienen, sodass nur das durch das Spritzgusselement gebildete Bauteil als Geräteanschlusseinrichtung montiert werden muss. Sämtliche notwendigen Kontaktierungen können vorher innerhalb oder mittels dieses Spritzgusselementes vorgenommen werden, sodass weitere Montagearbeiten entfallen können.

Ein "Befestigungselement" ist dabei beispielsweise ein durch Spritzguss hergestelltes Kunststoffbauteil, ein anderweitig elektrisch isolierend ausgestaltetes Bauteil oder ein Flansch, welcher mehrere Funktionen in sich vereint. Insbesondere ist ein solches Befestigungselement ein Bauteil, welches der mechanischen Montage an einem Gehäuse eines Elektrogerätes dient und gleichzeitig die erfindungsgemäßen Funktionen übernimmt.

Ein "Spritzgusselement" kann dabei jedes Bauteil sein, welches aus Spritzguss hergestellt ist. Beispielsweise ist dieses Bauteil dann mit dem Spritzgussverfahren aus einem Polyamid, einem Polyethylen oder einem anderen Kunststoff, welcher thermoplastisch oder teilthermoplastisch und insbesondere elektrisch nicht leitend ist, hergestellt.

Weiterhin kann ein solches Spritzgusselement auch separat zu beispielsweise Knickschutz- Zugentlastungstülle in Form von einem oder mehreren Montageteilen in einem separaten Fertigungsprozess gefertigt und komplettiert durch die Erdungselemente auf das Netzkabel montiert werden.

Um die Anschlussvorrichtung zuverlässig auszuführen, weist die Geräteanschlusseinrichtung eine korrespondierende Gehäuseblechgegenaufnahme auf, sodass die Geräteanschlusseinrichtung definiert in der Gehäuseblechaufnahme positionierbar ist.

Durch diese Ausführungsform ist sichergestellt, dass die Geräteanschlusseinrichtung mit ihrer Gehäuseblechgegenaufnahme direkt auf die Gehäuseblechaufnahme abgestimmt ausgestaltet ist. Damit ist eine fehlerfreie Montage sichergestellt. Weiterhin kann damit in Bezug auf elektromagnetische Verträglichkeit ein geschlossener Faraday'scher Käfig mit dem Gehäuse gebildet werden, in dem insbesondere das Gehäuseblech passgenau integriert wird.

In einer weiteren Ausführungsform ist die Klemmfeder so ausgestaltet, dass die Klemmfeder die Geräteanschlusseinrichtung lösbar fest mit der Gehäuseblechaufnahme klemmend verbindet, sodass ein elektrischer Kontakt zwischen dem Gehäuseblech und der Gehäuseblechaufnahme vorliegt.

Durch diese Ausgestaltung ist eine besonders sichere Kontaktierung möglich.

Um einen Anschluss des Netzkabels, insbesondere des Nullleiters und des Phasenleiters oder mehrerer Phasenleiter innerhalb des Elektrogerätes einfach zu ermöglichen, ist das Netzkabel der Elektrogeräte innenseitig entmantelt, sodass Erdungsleiter, Phasenleiter und Nullleiter als Litze vorliegen.

Zudem können die einzelnen Litzen, wie beispielsweise der Phasenleiter, der Nullleiter und selbstverständlich auch der Erdungsleiter bzw. Schutzleiter an ihrem Ende einen Stecker oder einen Kontaktstecker aufweisen, mit dem zusätzlich die innenliegende Elektronik oder andere Funktionselemente elektrisch kontaktiert werden können.

Zudem wird die Aufgabe gelöst durch ein Elektrogerät gemäß Anspruch 8, welches eine Anschlussvorrichtung gemäß einer der vorherig beschriebenen Ausführungsformen umfasst.

Ein solches Elektrogerät kann mittels der Anschlussvorrichtung montagefreundlich und vorteilhaft für die Qualitätssicherung ausgestaltet werden. Mittels der Anschlussvorrichtung kann die Montage mit einem einzigen Arbeitsschritt und ohne zusätzliches Werkzeug erfolgen, so dass Montagefehler, welche bei Installation der Erdung besonders kritisch und gefährlich wären, nahezu ausgeschlossen sind.

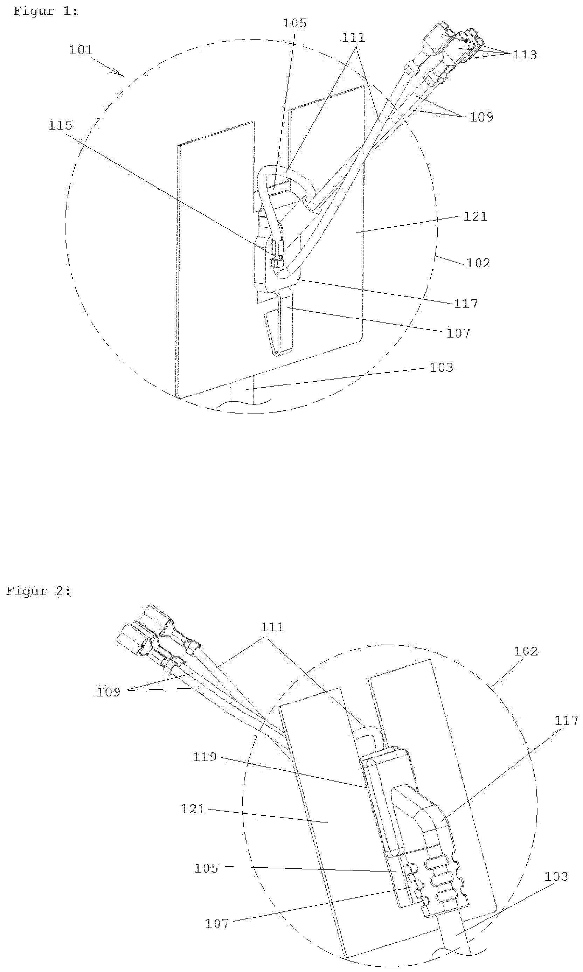

Im Weiteren wird die Erfindung anhand eines Ausführungsbeispiels näher erläutert. Dabei zeigen die
- Figur 1: eine perspektivische Darstellung einer Kabeldurchführung (in einer Teilgehäuseaufnahme, in einer Einschubposition,
- Figur 2: eine weitere perspektivische Darstellung der Kabeldurchführung aus Figur 1,

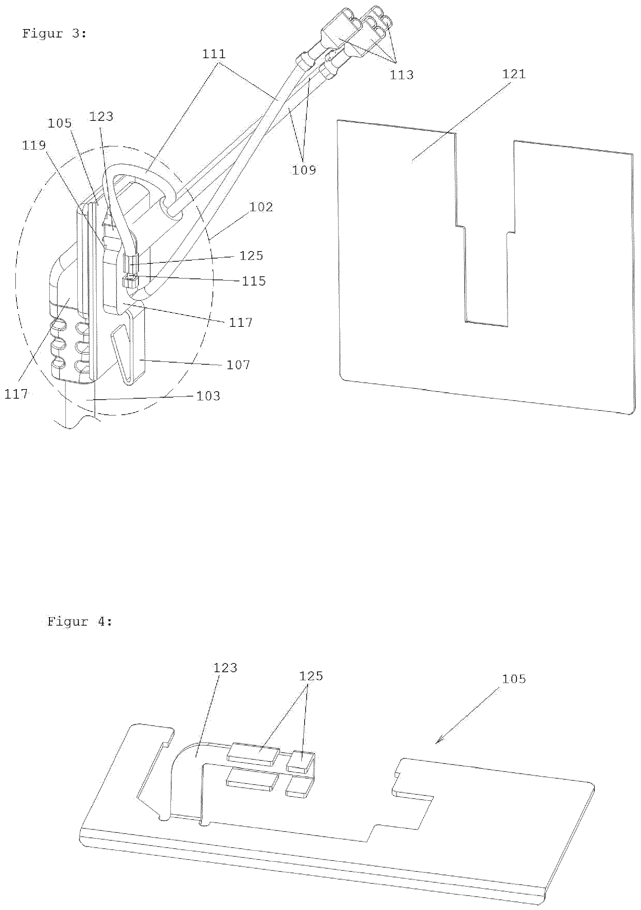

- Figur 3: die Kabeldurchführung mit einer separaten Teilgehäuseaufnahme und
- Figur 4: eine perspektivische Darstellung eines Einschubblechs.
- Figur 5: eine Kabeldurchführung mit einer Direktklemmfeder und einer Crimpverbindung, sowie
- Figur 6: eine Kabedurchführung mit einer Direktklemmfeder

Eine Kabeldurchführung 101 weist ein Kabel 103 und einen Gehäuseeinschubkontakt 102 auf, wobei auf einer Seite des Gehäuseeinschubkontakts die in dem Kabel 103 befindlichen Litzen 109, 111 abisoliert herausgeführt sind. Der Gehäuseeinschubkontakt 102 wird durch ein Einschubblech 105 und einer Kontaktklemmfeder 107, welche durch eine Spritzgusshalterung 117 fixiert sind, gebildet. Das Einschubblech ist weist einen Crimpanbindungssteg 123 und einen Crimpkontakt 125 auf, wobei das Einschubblech 105, der Crimpanbindungssteg 123 und der Crimpkontakt 125 einstückig aus einem Metallblech gefertigt sind.

Zusätzlich weist die Spritzgusshalterung 117 einen beidseitigen Führungsspalt 119 auf. Durch diesen Führungsspalt 119 können Seitenteile der Gehäuseaufnahme (hier als Ausschnitt 121 schematisch dargestellt) geführt werden.

Eine Erdungslitze 111 weist ein abisolierten Mittelteil 115 der Erdungslitze 111 auf. Die Erdungslitze 111 ist aus dem Kabel herausgeführt und wird gebogen derart an das Einschubblech 105 herangeführt, dass der Crimpkontakt 125 mittels Crimpzange elektrisch leitend mit dem abisolierten Mittelteil 115 der Erdungslitze 111 verbindbar ist und nach dem "Crimpen" der abisolierten Mittelteil 115 mit dem Einschubblech 105 elektrisch leitend kontaktiert ist.

Sowohl die Erdungslitze 111 als auch die Litzen 109 für die Phase und den Nullleiter weisen an ihrem Ende einen Steckanschluss 113 auf.

Vorliegend wird der Gehäuseeinschubkontakt 102 in den Ausschnitt 121 führend eingeschoben, sodass die Kontaktklemmfeder 107 in einem unteren Bereich mit dem Ausschnitt 121 einschiebend kontaktiert wird, sodass die Klemmfeder klemmend sowohl das Einschubblech 105 mit dem Ausschnitt 121 klemmend verbindet. Somit wird das Einschubblech 105 vorliegend zum einen als Blende des Gehäuses und zum anderen zugleich als Leiter für die Erdungslitze 111.

Die Kontaktklemmfeder 107 ist dabei in das Einschubblech 105 eingehängt und mit der Spitzgusshalterung 117 gehalten.

Sobald die Kabeldurchführung 101 mit einem Elektrogehäuse verbunden ist, können die Steckanschlüsse 113 der Litzen 109 und der Erdungslitze 111 mit der innenliegenden Elektrik des Elektrogeräts verbunden werden.

Weiterhin ist durch die Kabeldurchführung 101 sichergestellt, dass das Kabel 103 zugentlastet montiert ist, und zwar direkt im gleichen Zuge, wie die Kabeldurchführung am Gehäuse angebracht ist.

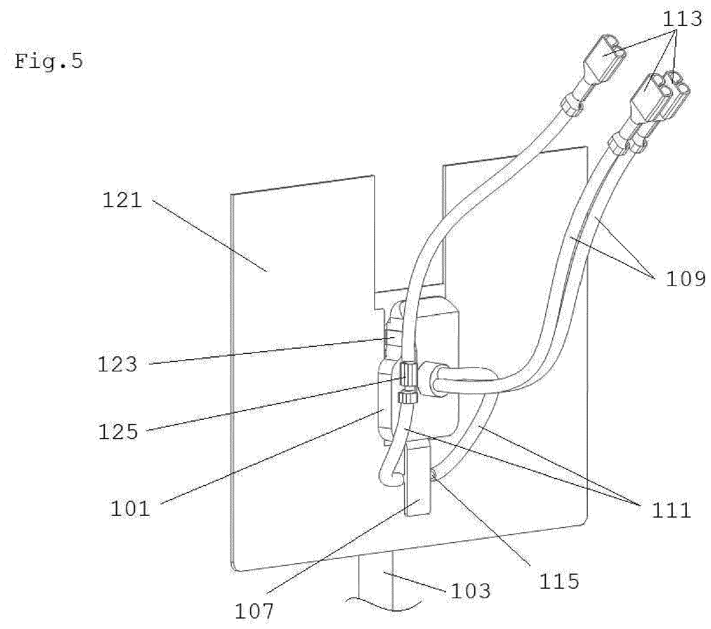

In einer Alternative (Figur 5) wird die Erdung, nämlich das Kontaktieren der Erdungslitze 111 als Schutzleiter direkt an das Gehäuse wie folgt realisiert:

In dem Ausschnitt 121 eines Gerätegehäuses ist die Kabeldurchführung 101 mit Zugentlastung wie oben beschrieben eingeschoben. Die Erdungslitze weist einen abisolierten Mittelteil 115 auf, welcher direkt mit der Kontaktklemmfeder 107 an den Ausschnitt 121 des Gehäuseblechs metallisch und damit elektrisch leitend kontaktiert ist.

Die Erdungslitze 111 ist zudem mit dem Crimpkontakt 125 am Crimpanbindungssteg 123 befestigt. Diese Befestigung kann sowohl mit einer an dieser Stelle abisolierten Erdungslitze, jedoch auch mit einer noch mit Isolierung versehenen Erdungslitze durchgeführt werden. Auch wenn an dieser Stelle am Crimpkontakt 125 keine elektrische Kontaktierung erfolgt, so ist die elektrische Kontaktierung der Erdungslitze 111 mittels der Kontaktklemmfeder 107 sichergestellt.

Sofern am Crimpkontakt 125 die Erdungslitze 111 ebenfalls abisoliert ist, so ist eine doppelte Kontaktierung mit dem Ausschnitt 121 des Gerätegehäuses sichergestellt.

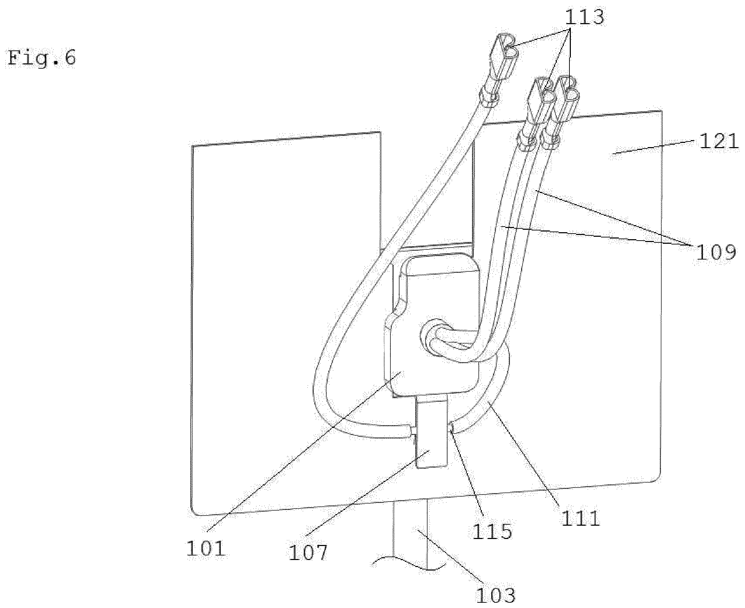

In einer weiteren Alternative (Figur 6) weist die Kabeldurchführung 101 keinen Crimpanbindungssteg 123 und keinen Crimpkontakt 125 am Einschubblech auf, sodass eine Kontaktierung der Erdungslitze 111 mittels der Klemmfeder 107 durch Andrücken des abisolierten Mittelteils 115 der Erdungslitze 111 an den Ausschnitt 121 des Gehäuseblechs erfolgt.

In jedem der gezeigten Fälle ist das Kabel 103 durch die Kabeldurchführung 101 mechanisch im Gehäuse eines Elektrogerätes gehalten und gleichzeitig mit einer Zugentlastung versehen, wobei die elektrische Kontaktierung der Erdung beziehungsweise des Schutzleiters mittels dem Einschubblech 105 oder der Kontaktklemmfeder 107 sichergestellt ist.

### Bezugszeichenliste

- 101: Kabeldurchführung mit Zugentlastung
- 102: Gehäuseeinschubkontakt
- 103: Kabel
- 105: Einschubblech
- 107: Kontaktklemmfeder
- 109: Litze
- 111: Erdungslitze
- 113: Steckanschluss
- 115: abisolierter Mittelteil
- 117: Spritzgusshalterung
- 119: Führungsspalt
- 121: Ausschnitt
- 123: Crimpanbindungssteg
- 125: Crimpkontakt

## Patentansprüche

1. Anschlussvorrichtung (101) zum elektrischen Kontaktieren eines Elektrogeräts mit einem Netzstecker, einem Netzkabel (103), wobei das Netzkabel einem Erdungsleiter (111), einen Nullleiter und einen Phasenleiter aufweist, und einer Geräteanschlusseinrichtung (102), wobei der Netzstecker an einem Ende des Netzkabels und die Geräteanschlusseinrichtung an einem anderen Ende des Netzkabels oder mittig angeordnet sind und die Geräteanschlusseinrichtung eine Klemmfeder (107) aufweist und an ein Gehäuse des Elektrogerätes montierbar ist, **dadurch gekennzeichnet, dass** der Erdungsleiter mittels der als mittels elastischer Verformung belastete Zunge ausgebildeten Klemmfeder elektrisch kontaktierend mit dem Gehäuse verbunden ist, sodass bei einer Montage der Geräteanschlusseinrichtung am Gehäuse des Elektrogerätes mittels der Klemmfeder eine Kraft auf das Gehäuse ausgeübt wird und eine Erdung der Gehäuseblechaufnahme mittels des Erdungsleiters ermöglicht ist .

2. Anschlussvorrichtung nach Anspruch 1, **dadurch gekennzeichnet, dass** der Erdungsleiter mittig oder in einem dem anderen Ende zugeordneten Bereich abisoliert ist, sodass eine Kontaktierungsstelle vorliegt und diese Kontaktierungsstelle mit dem Gehäuse direkt oder über ein Einschubblech elektrisch kontaktierend verbunden ist.

3. Anschlussvorrichtung nach einem der vorherigen Ansprüche, **dadurch gekennzeichnet, dass** das Netzkabel und das Gerätegehäuseblech mittels eines Befestigungselements, insbesondere mittels eines Spritzgusselements (117), miteinander verbunden sind, sodass die Geräteanschlusseinrichtung dadurch gebildet ist.

4. Anschlussvorrichtung nach einem der vorherigen Ansprüche, **dadurch gekennzeichnet, dass** die Geräteanschlusseinrichtung eine korrespondierende Gehäuseblechgegenaufnahme (119) aufweist, sodass die Geräteanschlusseinrichtung definiert in der Gehäuseblechaufnahme positionierbar ist.

5. Anschlussvorrichtung nach einem der vorherigen Ansprüche, **dadurch gekennzeichnet, dass** die Klemmfeder die Geräteanschlusseinrichtung lösbar fest mit der Gehäuseblechaufnahme klemmend verbindet, sodass ein elektrischer Kontakt zwischen dem Gehäuseblech und der Gehäuseblechaufnahme vorliegt.

6. Anschlussvorrichtung nach einem der vorherigen Anschlüsse, **dadurch gekennzeichnet, dass** das Netzkabel elektrogerätinnenseitig entmantelt ist, sodass Erdungsleiter, Phasenleiter und Nullleiter als Litze vorliegen.

7. Anschlussvorrichtung nach einem der vorherigen Ansprüche, **dadurch gekennzeichnet, dass** der Erdungsleiter, der Phasenleiter und/oder der Nullleiter je einen Kontaktstecker (113) aufweisen, sodass steckbar eine elektrische Verbindung mit einer Geräteelektrik realisierbar ist.

8. Elektrogerät mit einer Anschlussvorrichtung nach einem der vorherigen Ansprüche.

## Claims

1. Connection device (101) for electrically contacting an electrical appliance with a mains plug, a mains cable (103), wherein the mains cable has an earthing conductor (111), a neutral conductor and a phase conductor, and an appliance connection unit (102), wherein the mains plug is arranged at one end of the mains cable and the appliance connection unit is arranged at another end of the mains cable or in the centre and the appliance connection unit has a clamping spring (107) and can be mounted on a housing of the electrical appliance, **characterised in that** the earthing conductor is connected to the housing in an electrically contacting manner by means of the clamping spring designed as a tongue loaded by elastic deformation, such that when the appliance connection unit is mounted on the housing of the electrical appliance, a force is exerted on the housing by means of the clamping spring and earthing of the housing plate receptacle is made possible by means of the earthing conductor.

2. Connection device according to claim 1, **characterised in that** the earthing conductor is stripped of insulation in the centre or in an area assigned to the other end, such that a contacting point is present and this contacting point is connected to the housing directly or via an insertion plate in an electrically contacting manner.

3. Connection device according to any one of the preceding claims, **characterised in that** the mains cable and the appliance housing plate are connected to one another by means of a fastening element, in particular by means of an injection moulding element (117), such that the appliance connection unit is formed thereby.

4. Connection device according to any one of the preceding claims **characterised in that** the appliance connection unit has a corresponding mating housing plate receptacle (119) such that the appliance connection unit can be positioned in a defined manner in the housing plate receptacle.

5. Connection device according to any one of the preceding claims, **characterised in that** the clamping spring firmly connects the appliance connection unit to the housing plate receptacle in a releasable clamping manner, such that there is electrical contact between the housing plate and the housing plate receptacle.

6. Connection device according to any one of the preceding claims, **characterised in that** the mains cable is bare on the inside of the electrical appliance such that the earthing conductor, phase conductor and neutral conductor are stranded.

7. Connection device according to any one of the preceding claims **characterised in that** the earthing conductor, the phase conductor and/or the neutral conductor each have a contact plug (113), such that an electrical connection to an appliance electrical system can be realised in a pluggable manner.

8. Electrical appliance having a connection device according to any one of the preceding claims.

## Revendications

1. Dispositif de raccordement (101) pour la mise en contact électrique d'un appareil électrique avec une fiche de secteur, un câble de secteur (103), le câble de secteur présentant un conducteur de mise à la terre (111), un conducteur neutre et un conducteur de phase, et un mécanisme de raccordement d'appareil (102), la fiche de secteur étant agencée à une extrémité du câble de secteur et le mécanisme de raccordement d'appareil à une autre extrémité du câble de secteur ou au centre, et le mécanisme de raccordement d'appareil présentant un ressort de serrage (107) et pouvant être monté sur un boîtier de l'appareil électrique, **caractérisé en ce que** le conducteur de mise à la terre est relié de manière à établir un contact électrique avec le boîtier au moyen du ressort de serrage configuré sous forme de languette chargée au moyen d'une déformation élastique, de telle sorte que lors d'un montage du mécanisme de raccordement d'appareil sur le boîtier de l'appareil électrique, une force est exercée sur le boîtier au moyen du ressort de serrage et une mise à la terre du logement de tôle de boîtier est possible au moyen du conducteur de mise à la terre.

2. Dispositif de raccordement selon la revendication 1, **caractérisé en ce que** le conducteur de mise à la terre est dénudé au centre ou dans une zone associée à l'autre extrémité, de telle sorte qu'un point de contact est présent et ce point de contact est relié au boîtier de manière à établir un contact électrique directement ou par l'intermédiaire d'une tôle d'insertion.

3. Dispositif de raccordement selon l'une quelconque des revendications précédentes, **caractérisé en ce que** le câble de secteur et la tôle de boîtier d'appareil sont reliés entre eux au moyen d'un élément de fixation, notamment au moyen d'un élément moulé par injection (117), de telle sorte que le mécanisme de raccordement d'appareil est ainsi formé.

4. Dispositif de raccordement selon l'une quelconque des revendications précédentes, **caractérisé en ce que** le mécanisme de raccordement d'appareil présente un contre-logement de tôle de boîtier correspondant (119), de telle sorte que le mécanisme de raccordement d'appareil peut être positionné de manière définie dans le logement de tôle de boîtier.

5. Dispositif de raccordement selon l'une quelconque des revendications précédentes, **caractérisé en ce que** le ressort de serrage relie par serrage le mécanisme de raccordement d'appareil au logement de tôle de boîtier de manière fixe et amovible, de telle sorte qu'un contact électrique est présent entre la tôle de boîtier et le logement de tôle de boîtier.

6. Dispositif de raccordement selon l'une quelconque des revendications précédentes, **caractérisé en ce que** le câble de secteur est dégainé du côté intérieur de l'appareil électrique, de telle sorte que le conducteur de mise à la terre, le conducteur de phase et le conducteur neutre sont présents sous forme de toron.

7. Dispositif de raccordement selon l'une quelconque des revendications précédentes, **caractérisé en ce que** le conducteur de mise à la terre, le conducteur de phase et/ou le conducteur neutre présentent chacun une fiche de contact (113), de telle sorte qu'une connexion électrique avec un système électrique de l'appareil peut être réalisée par enfichage.

8. Appareil électrique avec un dispositif de raccordement selon l'une quelconque des revendications précédentes,
